# EUROPÄISCHE PATENTSCHRIFT

(11) **EP 4 006 269 B1**
(45) Veröffentlichungstag und Bekanntmachung des Hinweises auf die Patenterteilung: **27.12.2023**
(21) Anmeldenummer: 21208309.1
(22) Anmeldetag: 15.11.2021
(51) Int. Cl.: E04H 6/14

(54) **LAGER-/PARKVORRICHTUNG FÜR FAHRZEUGE**
STORAGE/PARKING DEVICE FOR VEHICLES
DISPOSITIF DE STOCKAGE / STATIONNEMENT POUR VÉHICULES

(43) Veröffentlichungstag der Anmeldung: 01.06.2022
(73) Patentinhaber: E-Parktower GmbH, 45721 Haltern (DE)
(72) Erfinder: Tiemann, Jörg, 49143 Bissendorf (DE); Schmidt, Frederik, 46284 Dorsten (DE); Füsting, Stefan, 48301 Nottuln (DE)
(74) Vertreter: Andrejewski - Honke Patent- und Rechtsanwälte Partnerschaft mbB

(56) Entgegenhaltungen:
- WO-A1-2018/167796
- CN-A- 110 040 013
- CN-A- 112 942 930

## Beschreibung

Die Erfindung betrifft eine Lager-/Parkvorrichtung vorzugsweise für Fahrzeuge wie beispielsweise Kraftfahrzeuge, Fahrräder etc., insbesondere einen vertikalen Parktower, mit mehreren gegenüber einem stationären Grundgerüst verfahrbaren Parkgondeln, ferner mit einem Antrieb für die miteinander gekoppelten Parkgondeln, und mit zumindest einer elektrischen Versorgungseinheit, vorzugsweise einer elektrischen Anschlusseinheit, sowie einer zugehörigen elektrischen Anschlussleitung an wenigstens einer Parkgondel, wobei die jeweilige Parkgondel zwischen einer Ladeposition und einer demgegenüber vertikal und/oder horizontal versetzten Lagerposition bzw. Parkposition verfahrbar ist.

Derartige Lager-/Parkvorrichtungen werden auch als vertikaler Parktower bezeichnet, welche nach dem Paternosterprinzip arbeiten. D. h., dass Grundgerüst ist in der Regel vertikal orientiert und auf einer zugehörigen Grundfläche aufgebaut und montiert. Die Parkgondeln bewegen sich dabei vergleichbar den Kabinen bei einem Paternosteraufzug, wie man ihn beispielsweise zur Personenbeförderung kennt und wie er seit Jahrzehnten eingesetzt wird. Dazu werden die einzelnen Parkgondeln regelmäßig mithilfe einer Umlaufkette als Antriebsglied im Umlaufbetrieb bewegt und sind an der betreffenden Umlaufkette oder den mehreren Umlaufketten hängend befestigt. Allgemein kann anstelle einer Kette zur Kopplung der einzelnen Parkgondeln untereinander aber auch mit beispielsweise einem anderen flexiblen Verbindungsmittel als Antriebsglied gearbeitet werden, beispielsweise einem Zahnriemen oder auch einem Seil. Jedenfalls zeichnen sich solche Lager-/Parkvorrichtungen dadurch aus, dass auf einer Grundfläche geringen Ausmaßes eine demgegenüber viel größere Anzahl an Parkflächen in vertikaler Anordnung zur Verfügung gestellt werden kann, sodass insbesondere der in urbanen Bereichen zur Verfügung stehende geringe Parkraum optimal genutzt wird. Aus diesem Grund erfreuen sich derartige Lager-/Parkvorrichtungen bzw. vertikale Lager-/Parkvorrichtungen zunehmender Beliebtheit.

Eine Lager-/Parkvorrichtung und insbesondere ein vertikaler Parktower mit mehreren umlaufend angetriebenen Parkgondeln und damit das Grundprinzip wird beispielsweise in der US 2004/0156699 A1 beschrieben. In diesem Zusammenhang ist ein Antrieb in Gestalt eines Kettenantriebes realisiert, welcher über ein Motorritzel einen umfangsseitigen Zahnkranz für den Antrieb des als Umlaufkette ausgebildeten Antriebsgliedes einsetzt.

Eine vergleichbare Lager-/Parkvorrichtung ist Gegenstand der DE 20 2017 100 651 U1. Hier sind das Grundgerüst versteifende Versteifungselemente vorgesehen, um eine hohe Funktionalität zur Verfügung zu stellen. Außerdem ist wenigstens eine der Parkgondeln mit einer Stromversorgungseinrichtung ausgerüstet.

In neuerer Zeit ergeben sich zunehmend Anforderungen dahingehend, die auf oder in der Parkgondel geparkten Kraftfahrzeuge während der Parkdauer mit elektrischer Energie zu laden. Das gilt sowohl dann, wenn auf der betreffenden Parkgondel beispielsweise ein Kraftfahrzeug mit Hybridantrieb (also Verbrennungsmotor und Elektromotor) abgestellt wird als auch für den Fall, dass ein reines Elektrofahrzeug geparkt wird. Ebenso ist es denkbar, die Lager-/Parkvorrichtung für beispielsweise Fahrräder oder Motorräder mit Elektroantrieb zu nutzen und während der Parkdauer für ein Aufladen zu sorgen.

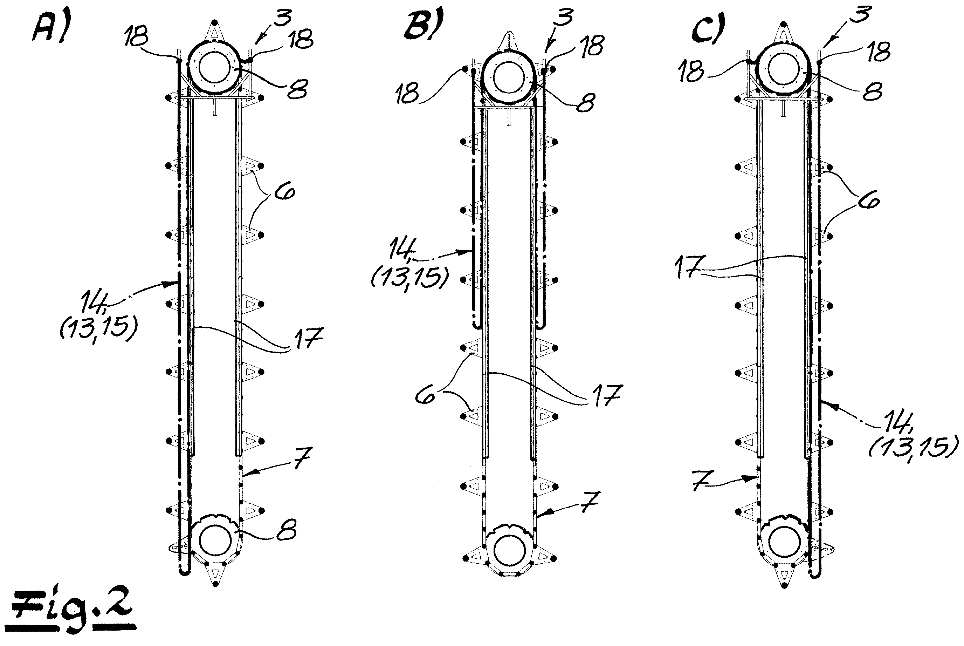

Aus diesem Grund schlägt der gattungsbildende Stand der Technik nach der WO 2018/167796 A1 vor, dass einzelne oder sämtliche Parkgondeln mit der elektrischen Anschlusseinheit bzw. Versorgungseinheit ausgerüstet werden können. Über die elektrische Anschlussleitung kann dann seinerseits das betreffende Kraftfahrzeug, das Zweirad, Dreirad oder auch ein anderes elektrisch betriebenes Kraftfahrzeug mit der notwendigen elektrischen Energie während der Parkzeit versorgt werden. Dadurch wird die Parkzeit optimal zum Aufladen der im Kraftfahrzeug vorhandenen Akkumulatoren genutzt. Zu diesem Zweck ist bei der bekannten Lehre eine dort insbesondere in den Figuren 2C und 2D dargestellte Schleifringeinheit vorgesehen, um die betreffende Parkgondel mit der erforderlichen elektrischen Energie zu versorgen.

Derartige Schleifringleitungen oder Schleifringanordnungen sind jedoch aus mehreren Gründen nachteilig. Zunächst einmal sind die einzelnen Schleifer und folglich auch die Schleifringanordnung bei einer offenen Bauweise der Lager-/Parkvorrichtung ohne seitliche Verkleidung oder der Anordnung in einem Gebäude sämtlichen Umwelteinflüssen wie Regen, zu hoher Luftfeuchtigkeit, Staub etc. ausgesetzt, was ihre dauernde Funktionsfähigkeit nicht nur beeinträchtigt, sondern sogar gänzlich infrage stellen kann. Hinzu kommt, dass Schleifringe verschleißen können, sodass eine ständige Wartung und gegebenenfalls ein Austausch erforderlich ist und somit hohe Wartungskosten entstehen. Schließlich sind in diesem Zusammenhang nicht nur witterungsbedingte Kurzschlüsse möglich, sondern erfordern die heutzutage eingesetzten hohen Ladespannungen von zum Teil mehreren 100 V eine große Beabstandung der Kontakte untereinander, um Überschläge oder Lichtbögen zu vermeiden. Das wiederum führt zu einem ausladenden und mithin kostspieligen Aufbau. Hier will die Erfindung insgesamt Abhilfe schaffen.

Der Erfindung liegt das technische Problem zugrunde, eine derartige Lager-/Parkvorrichtung für Fahrzeuge wie beispielsweise Kraftfahrzeuge, Fahrräder etc. so weiterzuentwickeln, dass eine dauerhafte, witterungsbeständige und funktionsgerechte elektrische Energieversorgung der einen bzw. der mehreren elektrischen Anschlusseinheiten bzw. Versorgungseinheiten an der oder in den betreffenden Parkgondeln dauerhaft gewährleistet ist.

Zur Lösung dieser technischen Problemstellung schlägt die Erfindung bei einer gattungsgemäßen Lager-/Parkvorrichtung vor, dass wenigstens ein zusammen mit den Parkgondeln verfahrbares flexibles Schleppglied zur Führung der wenigstens einen elektrischen Anschlussleitung vorgesehen ist.

In der Regel ist die Auslegung so getroffen, dass jede der Parkgondeln der erfindungsgemäßen Lager-/Parkvorrichtung mit wenigstens einer zugehörigen elektrischen Versorgungseinheit und insbesondere einer elektrischen Anschlusseinheit sowie einer zugehörigen Anschlussleitung ausgerüstet ist. Außerdem wird meistens so vorgegangen, dass die zugehörige elektrische Anschlussleitung mithilfe des flexiblen Schleppgliedes an die betreffende elektrische Anschlusseinheit angeschlossen ist. Die elektrische Anschlusseinheit mag sich dabei an einem Rand einer Grundfläche der Parkgondel finden, welche das hierauf befindliche Kraftfahrzeug, Fahrrad etc. aufnimmt. Grundsätzlich sind auch andere Anbringungsmöglichkeiten der elektrischen Anschlusseinheit bzw. elektrischen Versorgungseinheit denkbar. So ist genauso gut eine Anbringung kopfseitig der Parkgondel gegenüberliegend zur Grundfläche denkbar. Ja sogar eine Anordnung der elektrischen Versorgungseinheit in oder auf der Grundfläche wird von der Erfindung mitumfasst, nämlich dergestalt, dass in diesem Fall und beispielhaft das betreffende Fahrzeug induktiv geladen wird oder induktiv geladen werden kann.

Selbstverständlich eignet sich die erfindungsgemäße Lager-/Parkvorrichtung auch für Fahrzeuge ohne Elektroantrieb, die in diesem Fall schlicht und ergreifend auf der Grundfläche abgestellt werden und die elektrische Versorgungseinheit nicht zum elektrischen Aufladen benötigen. Darüber hinaus liegt es natürlich auch im Rahmen der Erfindung, dass mithilfe der elektrischen Versorgungseinheit und insbesondere elektrischen Anschlusseinheit nicht nur Akkumulatoren bei Elektro- oder Hybridkraftfahrzeugen mit elektrischer Energie versorgt werden können. Sondern genauso gut lässt sich mithilfe der elektrischen Versorgungseinheit auch eine Kraftfahrzeugbatterie bei einem Fahrzeug mit Verbrennermotor aufladen bzw. in seinem Ladezustand erhalten, wenn das betreffende Fahrzeug für eine längere Zeit (beispielsweise zum Überwintern) abgestellt werden soll. Darüber hinaus ist es denkbar, mithilfe der elektrischen Versorgungseinheit das betreffende Fahrzeug zu heizen und damit betriebsfertig zu halten, wenn die fragliche Lager-/Parkvorrichtung in beispielsweise arktischen Bereichen aufgestellt werden soll.

Um dies im Detail zu realisieren und umzusetzen, sind die Parkgondeln regelmäßig mittels eines um wenigstens zwei Umlenkelemente umlaufenden sowie von dem Antrieb angetriebenen flexiblen Antriebsgliedes miteinander verbunden. Die Parkgondeln werden dabei jeweils hängend an dem Antriebsglied befestigt. Das Antriebsglied nimmt dabei das flexible Schleppglied mit. In der Regel sind an jeder Schmalrandseite der in der Regel rechteckigen Grundfläche der Parkgondel und folglich auch der Schmalrandseite des Grundgerüstes jeweils zwei Umlenkelemente mit dem darüber geführten umlaufenden sowie von dem Antrieb angetriebenen flexiblen Antriebsglied vorgesehen.

Die Verbindung zwischen dem Antriebsglied und dem flexiblen Schleppglied erfolgt dabei dergestalt, dass an dieser Stelle schwimmend gelagerte Mitnehmer zwischengeschaltet sind. D. h., zwischen dem flexiblen Antriebsglied und dem flexiblen Schleppglied sind ein oder mehrere Mitnehmer realisiert. Die Mitnehmer sind darüber hinaus schwimmend gelagert, lassen also ein Relativspiel zwischen einerseits dem jeweiligen Antriebsglied und andererseits dem Schleppglied zu. Das kann beispielsweise so realisiert und umgesetzt werden, dass das Antriebsglied einen oder mehrere angeschlossene Mitnehmer in Gestalt von beispielsweise Zapfen aufweist, die in zugehörige Aufnahmen des Schleppgliedes mit Spiel eingreifen. Dadurch wird das Schleppglied bei einer Bewegung des Antriebsgliedes (mit Spiel bzw. schwimmend) mitgenommen.

Des Weiteren wird regelmäßig so vorgegangen, dass die Umlenkelemente jeweils als Doppelräder zur Führung einerseits des flexiblen Antriebsgliedes und andererseits des flexiblen Schleppgliedes ausgebildet sind. D. h., ein Rad des Doppelrades dient zur Führung des Antriebsgliedes und das andere Rad zur Führung des Schleppgliedes. Beide Räder sind achsgleich am Grundgerüst drehbar gelagert.

Darüber hinaus wird meistens so vorgegangen, dass das Schleppglied an zwei Festpunkte des Grundgerüstes angeschlossen ist. Die beiden Festpunkte finden sich dabei üblicherweise kopfseitig des Grundgerüstes. Außerdem wird meistens so vorgegangen, dass das Schleppglied lediglich über ein kopfseitig des Grundgerüstes drehbar gelagertes Umlenkelement geführt wird. Demgegenüber wird das Antriebsglied sowohl über das kopf- als auch fußseitig drehbar am Grundgerüst gelagerte Umlenkelement geführt.

D. h., die beiden Umlenkelemente an sowohl der einen Schmalseite des Grundgerüstes als auch an der anderen Schmalseite des Grundgerüstes sind jeweils kopfseitig und fußseitig des Grundgerüstes vorgesehen. Außerdem sind die beiden Umlenkelemente jeweils drehbar gegenüber dem Grundgerüst gelagert. Über die Umlenkelemente wird das flexible Antriebsglied geführt, und zwar umlaufend. Demgegenüber wird das flexible Schleppglied ausgehend von seinen beiden Festpunkten lediglich über das jeweils kopfseitig des Grundgerüstes drehbar gelagerte Umlenkelement geführt. An dieser Stelle ist - wie gesagt - im Allgemeinen ein jeweiliges Doppelrad zur Führung einerseits des Antriebsgliedes und andererseits des Schleppgliedes vorgesehen und realisiert.

Dadurch, dass das Schleppglied ausgehend von den beiden Festpunkten kopfseitig des Grundgerüstes lediglich über das kopfseitig des Grundgerüstes drehbar gelagerte Umlenkelement geführt wird, lässt sich das Schleppglied in Frontansicht auf die Umlenkelemente und damit die Schmalseite des Grundgerüstes zwischen einer rechten vollständigen Schlingenposition, einer linken vollständigen Schlingenposition und einer mittigen jeweils Halbschlingenposition verfahren. Das wird mit Bezug zum Ausführungsbeispiel noch näher erläutert.

Zur Aufnahme und Führung der einen bzw. der mehreren elektrischen Anschlussleitungen ist das Schleppglied im Allgemeinen als Schleppkette mit U-förmigen Kettengliedern vorgesehen und ausgebildet. Als Folge hiervon handelt es sich bei dem Umlenkelement um jeweils Doppelritzel für einerseits eine Antriebskette als Antriebsglied und andererseits die Schleppkette als Schleppglied. Dabei ist nach vorteilhafter Ausgestaltung die Auslegung weiter so getroffen, dass die U-förmigen Kettenglieder neben der wenigstens einen elektrischen Anschlussleitung zusätzlich zumindest eine Datenleitung aufnehmen. Die Datenleitung ist dabei in der Regel datentechnisch an eine Steuereinheit angeschlossen. Auf diese Weise kann ein Lastmanagement realisiert werden, welches nachfolgend noch näher erläutert wird. Außerdem kann hierdurch die Steuereinheit jede einzelne Versorgungseinheit steuern.

Die U-förmigen Kettenglieder sind zur Führung der elektrischen Anschlussleitung ebenso wie der Datenleitung mit jeweils Trennstegen zur Trennung der einzelnen Leitungen voneinander ausgerüstet. Auf diese Weise wird eine einwandfreie Führung der einzelnen Leitungen gewährleistet, auch und insbesondere für den Fall, dass mehrere elektrische Anschlussleitungen vorgesehen sind. Hierzu trägt auch der Umstand bei, dass die Leitungen mittels jeweiliger Zugentlastungen an den Kettengliedern fixiert sind. Dadurch werden etwaige Spannungen zwischen einerseits dem jeweiligen Kettenglied und folglich der Schleppkette und andererseits den Leitungen vermieden und wird von vornherein einem etwaigen Leitungsriss vorgebeugt.

Die Kettenglieder sind darüber hinaus vorteilhaft mit seitlichen Führungszapfen zum Eingriff in das Doppelritzel ausgerüstet. D. h., die Kettenglieder der Schleppkette werden mithilfe der Führungszapfen im Bereich des Doppelritzels aufgenommen und geführt und ansonsten über die Mitnehmer mit der Antriebskette gekoppelt. Dadurch laufen die Antriebskette und die Schleppkette überwiegend synchron.

Durch die zusätzlich vorgesehene Datenleitung und ihre Aufnahme und Führung mithilfe des Schleppgliedes bzw. der Schleppkette lassen sich die einzelnen elektrischen Versorgungseinheiten mithilfe der Steuereinheit zielgenau ansteuern. D. h., über die Datenleitung ist eine ständige Kommunikation zwischen der Steuereinheit und den einzelnen elektrischen Versorgungseinheiten bzw. elektrischen Anschlusseinheiten möglich, und zwar drahtgebunden. Das ist von besonderem Vorteil, weil auf eine Funkübertragung oder allgemein einen drahtlosen Betrieb erfindungsgemäß ausdrücklich verzichtet wird, da eine solche Kommunikation bei einem üblicherweise als Stahlfachwerk aufgebauten Grundgerüst mit ebenfalls aus Stahl hergestellten Stahlgondeln in der Praxis nicht oder nicht störungsfrei möglich ist.

Darüber hinaus gelingt es über diese datentechnische Kommunikation mithilfe der Datenleitung seitens eines Energieversorgers, die zur Verfügung stehende elektrische Leistung an der jeweiligen elektrischen Versorgungseinheit bzw. elektrischen Anschlusseinheit von außen her steuern oder begrenzen zu können, um eine etwaige Überlastung örtlicher Stromnetze zu vermeiden.

Zugleich eröffnet die vorgesehene Datenleitung und der auf diese Weise zur Verfügung gestellte sichere und dauerhafte Kommunikationskanal zwischen der Steuereinheit und der betreffenden elektrischen Versorgungseinheit die weitergehende Möglichkeit, die an der betreffenden elektrischen Versorgungseinheit tatsächlich entnommene elektrische Leistung zielgenau abrechnen zu können und beispielsweise jeweils mit geeichten Energiezählern zu arbeiten. Dadurch wird ein Nutzer nach einer vorgeschalteten Identifikationsprüfung und Freischaltung der elektrischen Versorgungseinheit hinsichtlich der abgerechneten Energiemenge nicht in irgendeiner Weise übervorteilt.

Insgesamt wird hierdurch eine Lager-/Parkvorrichtung, insbesondere für Fahrzeuge zur Verfügung gestellt, die auf frappierend einfache Art und Weise elektrische Versorgungseinheiten an einzelnen oder sämtlichen Parkgondeln des vorzugsweise realisierte Parktowers zur Verfügung stellt. Etwaige witterungs- oder klimabedingte Ausfälle der elektrischen Versorgung sind hierbei ausdrücklich nicht zu befürchten. Außerdem gewährleistet die Führung der jeweiligen elektrischen Anschlussleitung mithilfe des separaten flexiblen Schleppgliedes bzw. der Schleppkette einen dauerhaften und funktionssicheren Betrieb. In Verbindung mit der zusätzlich mithilfe des Schleppgliedes bzw. der Schleppkette geführten Datenleitung wird darüber hinaus ein sicherer Kommunikationskanal zwischen der Steuereinheit beispielsweise am Fuß des Grundgerüstes oder örtlich getrennt hiervon einerseits und den einzelnen elektrischen Versorgungseinheiten an oder in den Parkgondeln andererseits zur Verfügung gestellt. Dadurch ist ein elektrisches Lastmanagement möglich, welches die Option eröffnet, seitens eines örtlich unter Umständen weit entfernten elektrischen Energieversorgers die zur Verfügung gestellte elektrische Leistung an der jeweiligen elektrischen Versorgungseinheit an die tatsächlichen Gegebenheiten des elektrischen Energieversorgungsnetzes im Sinne eines Lastmanagements anpassen zu können.

Darüber hinaus eröffnet die Erfindung die Möglichkeit, über die elektrische Versorgungseinheit und beispielsweise im zugehörigen Fahrzeug befindlichen Akkumulator ein sogenanntes bidirektionales Laden realisieren und umsetzen zu können. D. h., es besteht nicht nur die Möglichkeit, den Akkumulator im Fahrzeug von außen her mit elektrischer Energie zu versorgen. Sondern genauso gut kann der Akkumulator selbst als Energiequelle über die elektrische Versorgungseinheit und die wenigstens eine elektrische Anschlussleitung zum Einspeisen von elektrischer Energie in das elektrische Energieversorgungsnetz genutzt werden. Das war in dieser Konsequenz bisher nicht möglich. Die gleichen Vorteile werden auch für den Fall beobachtet, dass nicht Kraftfahrzeuge mithilfe der erfindungsgemäßen Lager-/Parkvorrichtung bevorratet werden, sondern vielmehr und beispielhaft großvolumige Gebrauchsgüter wie beispielsweise Möbel, elektrische Geräte oder andere Einlagerungsgegenstände, die bisher typischerweise in sogenannten Lagerhäusern von Benutzern eingelagert werden. Im Rahmen der Erfindung können nun die einzelnen Parkgondeln als Lagerboxen fungieren, sodass die Lager-/Parkvorrichtung nach der Erfindung eine Art Umlaufregal zur Verfügung stellt. Da derartige Lagerboxen im Regelfall zumindest mit elektrischem Licht ausgerüstet sind und meistens auch wenigstens eine Steckdose aufweisen, sorgt die zumindest eine elektrische Versorgungseinheit sowie die zugehörige elektrische Anschlussleitung an der betreffenden Parkgondel für den Betrieb einer elektrischen Leuchte beispielsweise im Innern der Lagerbox und/oder einer Steckdose. Dabei versteht es sich, dass die betreffende Lagerbox bzw. die als Lagerbox ausgebildete Parkgondel in der Regel allseits geschlossen ausgebildet ist, um die hierin bevorrateten Einlagerungsgegenstände vor etwaigen Umwelteinflüssen zu schützen. Grundsätzlich können die Lagerboxen aber auch zumindest teilweise geöffnet sein. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Lager-/Parkvorrichtung in einer schematischen Übersicht,
- Fig. 2A, 2B und 2C: die Lager-/Parkvorrichtung nach der Fig. 1 schematisch in unterschiedlichen Funktionsstellungen und
- Fig. 3: ein Kettenglied der Schleppkette.

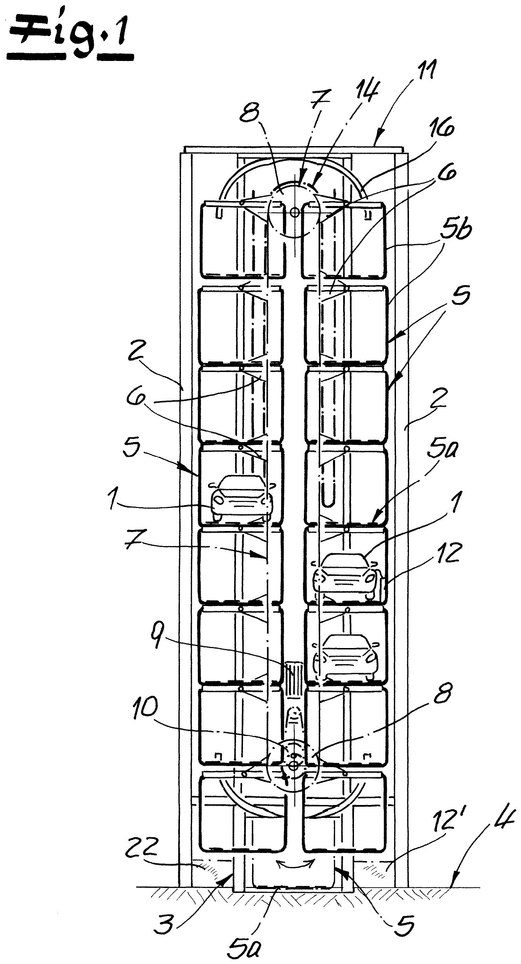

In der Fig. 1 ist eine Lager-/Parkvorrichtung für Fahrzeuge 1 dargestellt. Bei dem fraglichen Fahrzeug 1 handelt es sich entsprechend der figürlichen Wiedergabe in der Fig. 1 um ein Hybrid-oder Elektrokraftfahrzeug. Grundsätzlich können in der Lager-/Parkvorrichtung aber auch beispielsweise Fahrräder, elektrisch betriebene Fahrräder, Elektromotorräder, Elektroquads, Elektro-Lkw etc. oder auch Fahrzeuge mit herkömmlichem Antrieb oder auch ohne Antrieb geparkt werden.

Zu diesem Zweck kann die schematisch in der Fig. 1 dargestellte Lager-/Parkvorrichtung mit ein oder mehreren Seitenverkleidungen 2 ausgerüstet werden oder auch als offene Variante betrieben werden. Dazu ist generell ein stationäres Grundgerüst 3 realisiert, welches auf einer Grundfläche 4 aufgestellt wird. Bei dem Grundgerüst 3 kann es sich um ein Stahlskelett handeln, welches zur Aufnahme und Führung mehrerer gegenüber dem Grundgerüst 3 verfahrbarer Parkgondeln 5 in der Lage und ausgebildet ist. Die einzelnen Parkgondeln 5 verfügen ihrerseits über eine Grundfläche 5a, auf der nach dem Ausführungsbeispiel das Fahrzeug 1 abgestellt ist. Die Grundfläche 5a ist über Bügel 5b nach dem Ausführungsbeispiel drehbar an eine jeweilige Anschlussplatte 6 angeschlossen, die wiederum einen Bestandteil eines flexiblen Antriebsgliedes 7 darstellt, bei dem es sich nach dem Ausführungsbeispiel um eine Antriebskette 7 handelt.

Dadurch werden die einzelnen Parkgondeln 5 jeweils hängend und drehbar mit der Antriebskette 7 verbunden. Das Grundgerüst 3 ist ebenso wie die Grundfläche 5a rechteckig ausgelegt. Dabei sind die jeweiligen Schmalseiten der Grundfläche 5a und des Grundgerüstes 3 zueinander ausgerichtet.

Das flexible Antriebsglied 7 bzw. die Antriebskette 7 wird umlaufend über zwei Umlenkelemente 8 geführt. Die Umlenkelemente 8 sind dabei einerseits kopfseitig drehbar an das Grundgerüst 3 und andererseits fußseitig drehbar an das Grundgerüst 3 angeschlossen. Außerdem ist die Auslegung so getroffen, dass das Grundgerüst 3 an seiner in Frontansicht in der Fig. 1 dargestellten Schmalseite mit zwei Umlenkelementen 8 und der darüber umlaufend geführten Antriebskette 7 und an der gegenüberliegenden Schmalseite des insgesamt rechteckförmigen Grundgerüstes 3 wiederum mit zwei gleich aufgebauten Umlenkelementen 8 mit zugehöriger hierüber umlaufend geführten Antriebskette 7 ausgerüstet ist. Dadurch lassen sich die einzelnen Parkgondeln 5 nach dem Paternosterprinzip mithilfe der beiden parallel zueinander angeordneten Antriebsketten 7 und den hieran hängend befestigten Parkgondeln 5 im Umlaufbetrieb bewegen.

Geht man in diesem Zusammenhang von einer vollständigen Umlaufbewegung aus, die zu einem Winkel von 360° korrespondieren mag, so sind nach dem Ausführungsbeispiel und entsprechend der Darstellung in den Figuren 2A, 2B und 2C Bewegungen ausgehend von einer mittleren Position bei 0° in einer Richtung bis -180° und in der anderen Richtung bis +180° genauso gut (wie ein Umlaufbetrieb) möglich, um jede der dargestellten Parkgondeln 5 einerseits in eine in der Fig. 1 fußseitig dargestellte Ladeposition und andererseits eine Lagerposition bzw. Parkposition verfahren zu können.

Tatsächlich korrespondiert die in der Fig. 1 dargestellte Ladeposition der an dieser Stelle fußseitig des Grundgerüstes 3 angeordneten Parkgondel 5 dazu, dass das betreffende Fahrzeug 1 über die Grundfläche 4 unmittelbar auf die Grundfläche 5a der Parkgondel 5 auffahren kann. Anschließend wird ein Antrieb 9, 10 für die miteinander gekoppelten Parkgondeln 5 angesteuert, sodass als Folge hiervon die betreffende und zuvor fußseitig vorgesehene Parkgondel 5 in die demgegenüber vertikal und/oder horizontal versetzte Lagerposition verfahren wird. Nach dem Ausführungsbeispiel kommt es beim Übergang von der Ladeposition zur Lagerposition sowohl zu einem Horizontalversatz der Parkgondel 5 als auch und insbesondere zu einem Vertikalversatz, findet sich nämlich anschließend das Fahrzeug 1 an einem höheren Punkt des Grundgerüstes 3, wie es in der Fig. 1 bildlich wiedergegeben ist. - Selbstverständlich kann auch mit anderen Ladepositionen gearbeitet werden, wenn die Fahrzeuge 1 beispielsweise über eine Rampe und nicht fußseitig des Grundgerüstes 3 auf die Grundfläche 5a auffahren.

Der Antrieb 9, 10 setzt sich nach dem Ausführungsbeispiel aus einem Elektromotor 9 sowie einem Motorritzel zusammen, welches in ein umfangseitiges Zahnrad 10 eingreift, welches seinerseits in Eingriff mit einzelnen Kettengliedern der Antriebskette 7 ist und auf diese Weise für den Antrieb der umlaufenden Antriebskette 7 sorgt. Dabei erfolgt die Verfahrbewegung entsprechend der Darstellung in den Fig. 2A bis 2C sowohl in einer Richtung (Uhrzeigersinn) als auch in der anderen Richtung (Gegenuhrzeigersinn), sodass auf diese Weise jede Parkgondel 5 von der fußseitigen Ladeposition in die Lagerposition und wieder zurück bewegt werden kann.

Wie zuvor bereits erläutert, kann die erfindungsgemäße Lager-/Parkvorrichtung offen aufgestellt werden, d. h. ohne Seitenverkleidung 2 und auch ohne angedeutetes Dach 11. Sofern jedoch ein oder mehrere Seitenverkleidungen 2 und auch ein Dach 11 realisiert sind, können diese Seitenverkleidungen 2 beispielsweise als Multimedia-Werbeflächen genutzt werden. Außerdem besteht die Möglichkeit, auf dem Dach 11 ein oder mehrere Solarzellen zu montieren. Gleiches gilt auch für die Seitenflächen 2. In Verbindung mit einem zusätzlich angedeuteten Batteriespeicher 12` besteht hierdurch die Möglichkeit, etwaige Leistungsspitzen beim elektrischen Aufladen der einzelnen Fahrzeuge 1 abfangen zu können bzw. bei geringer erforderlicher elektrischer Leistung für den Ladevorgang diese direkt über den Batteriespeicher 12' oder auch die Solarzellen zur Verfügung zu stellen.

Der Zugang zu der findungsgemäßen Lager-/Parkvorrichtung ist in der Regel über eine automatisierte Zutrittskontrolle mit oder ohne Fernbedienung möglich. Dazu findet im Rahmen der Zutrittskontrolle eine Berechtigungsprüfung des zutrittswilligen Benutzers statt. Das kann über einen Berechtigungscode erfolgen, welcher von dem zutrittswilligen Bediener an beispielsweise einem Terminal eingegeben oder mit diesem ausgetauscht werden muss. Hier sind Lösungen unter Einsatz von Sende-/Empfangseinheiten wie beispielsweise unter Rückgriff auf RFID-Chips oder auch mithilfe eines oder mehrerer QR-Codes möglich und denkbar.

Von besonderer Bedeutung für die Erfindung ist nun der Umstand, dass einzelne oder sämtliche der Parkgondeln 5 mit einer elektrischen Versorgungseinheit 12 ausgerüstet sind. Im Rahmen der Darstellung nach der Fig. 1 ist lediglich eine elektrische Versorgungseinheit 12 exemplarisch dargestellt, die nach dem Ausführungsbeispiel und nicht einschränkend als elektrische Anschlusseinheit 12 ausgebildet ist. Mit ihrer Hilfe kann das betreffende Fahrzeug 1 induktiv geladen werden. Nach dem Ausführungsbeispiel wird der Ladevorgang allerdings über ein in der Fig. 1 angedeutetes elektrisches Verbindungskabel zwischen dem Fahrzeug 1 und der elektrischen Versorgungseinheit bzw. Anschlusseinheit 12 vorgenommen. Im Beispielfall und nicht einschränkend mag die elektrische Versorgungseinheit 12 insgesamt eine elektrische Leistung von 22 KW zur Verfügung stellen, was selbstverständlich nur beispielhaft gilt. Außerdem kann zusätzlich noch und gleichsam außerhalb oder neben der Lager-/Parkvorrichtung eine weitere oder mehrere weitere elektrische Anschlusseinheiten 12 vorgesehen und auf der Grundfläche 4 platziert werden, was im Detail jedoch nicht dargestellt ist.

Erfindungsgemäß ist nun zur Führung einer zusätzlich vorgesehenen elektrischen Anschlussleitung 13 für die Versorgungseinheit 12 ein zusammen mit den Parkgondeln 5 verfahrbares flexibles Schleppglied 14 vorgesehen, bei dem es sich nach dem Ausführungsbeispiel um eine Schleppkette 14 handelt, wie man sie am besten anhand der einzelnen Funktionsstellungen in den Figuren 2A bis 2C nachvollziehen kann. Zusätzlich dient das Schleppglied bzw. die Schleppkette 14 zur Führung einer Datenleitung 15. Die Antriebskette 7 und die Schleppkette 14 werden dabei synchron bewegt.

Die Auslegung ist insgesamt so getroffen, dass die Parkgondeln 5 mithilfe des um die beiden Umlenkelemente 8 umlaufenden sowie vom Antrieb 9, 10 angetriebenen Antriebsgliedes 7 miteinander verbunden sind, wobei das Antriebsglied bzw. die Antriebskette 7 zugleich das Schleppglied bzw. die Schleppkette 14 mitnimmt. Dazu ist die Antriebskette 7 mit einzelnen Mitnehmern ausgerüstet, die in zugehörige Aufnahmen der Schleppkette 14 schwimmend eingreifen. Bei den Umlenkelementen 8 handelt es sich um Doppelräder bzw. Doppelritzel, welche zur Führung einerseits der Antriebskette 7 und andererseits der Schleppkette 14 ausgebildet sind. Dazu bewegen sich die Antriebskette 7 mit ihrem Doppelritzel und ebenso die Schleppkette 14 mit ihrem Doppelritzel überwiegend in jeweils aufgespannten parallelen und voreinander beabstandeten Ebenen.

Darüber hinaus ist eine Führungsvorrichtung 16 für die einzelnen Parkgondeln 5 bzw. die betreffenden an die Antriebskette 7 angeschlossenen Anschlussplatten 6 vorgesehen. Außerdem eine weitere Führung bzw. Führungsvorrichtung 17 für die zusätzlich realisierte Schleppkette 14. Hierbei handelt es sich um eine U-förmige Führungsschiene.

Die Schleppkette 14 ist ausweislich der Darstellung in den Figuren 2A bis 2C an jeweils zwei Festpunkte 18 kopfseitig des Grundgerüstes 3 angeschlossen. Man erkennt, dass das Schleppglied bzw. die Schleppkette 14 ausgehend von dem einen Festpunkt 18 lediglich über das kopfseitig des Grundgerüstes 3 drehbar gelagerte Umlenkelement 8 hin zum anderen Festpunkt 18 geführt wird. Demgegenüber wird die Antriebskette 7 über beide Umlenkelemente 8 umlaufend geführt, die jeweils kopf- und fußseitig drehbar an das Grundgerüst 3 angeschlossen sind. Dadurch lässt sich die Schleppkette 14 in der Frontansicht nach den Fig. 2A bis 2C auf die Umlenkelemente 8 zwischen einer in der Fig. 2C dargestellten rechten vollständigen Schlingenposition, einer in der Fig. 2A wiedergegebenen linken vollständigen Schlingenposition und einer in der Fig. 2B wiedergegebenen mittigen jeweils Halbschlingenposition verfahren.

Auf diese Weise wird die Schleppkette 14 sowohl bei einer Drehung des kopfseitigen Umlenkelementes 8 im Uhrzeigersinn als auch gegen den Uhrzeigersinn immer vertikal hochgefahren und geht dabei von der Position entsprechend der Darstellung in der Fig. 2A bis maximal zur Position in der Fig. 2C und zurück über. Dadurch können alle Parkgondeln 5 sowohl die Ladeposition als auch jede Lagerposition bzw. Parkposition erreichen und werden dennoch die einzelnen elektrischen Anschlussleitungen 13 ebenso wie die Datenleitung 15 einwandfrei mithilfe der Schleppkette 14 geführt.

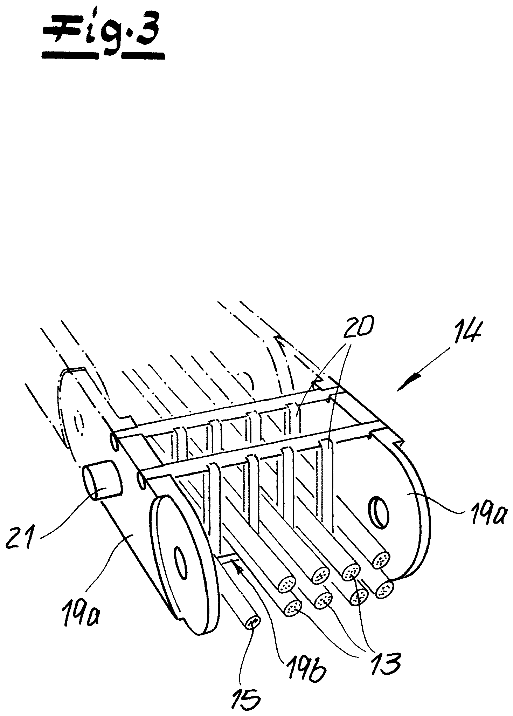

Um dies im Detail zu realisieren und umzusetzen, ist die Schleppkette 14 jeweils mit insbesondere in der Fig. 3 wiedergegebenen U-förmigem Kettengliedern 19a, 19b ausgerüstet. Die U-förmigen Kettenglieder 19a, 19b verfügen im Schnitt über zwei U-Schenkel 19a, die größtenteils vertikal auf einer die beiden U-Schenkel 19a miteinander verbindenden U-Basis 19b aufstehen. Anhand der Darstellung in der Fig. 3 erkennt man, dass die fraglichen U-förmigen Kettenglieder 19a, 19b neben der einen bzw. den mehreren elektrischen Anschlussleitungen 13 zusätzlich zumindest eine Datenleitung 15 im Innern bzw. zwischen ihren beiden U-Schenkel 19a und auf der U-Basis 19b aufnehmen.

Außerdem macht die Fig. 3 deutlich, dass die U-förmigen Kettenglieder 19a, 19b mit Trennstegen 20 ausgerüstet sind, die dafür sorgen, dass die einzelnen elektrischen Anschlussleitungen 13 und auch die Datenleitung 15 voneinander getrennt werden können. Auf diese Weise ist gewährleistet, dass die einzelnen Leitungen 13, 15 in der Regel getrennt nebeneinander und in zwei (oder mehr) Lagen übereinander lose in den auf diese Weise gebildeten Kammern der Schleppkette 14 geführt werden. Außerdem sind die einzelnen Leitungen 13, 15 in regelmäßigen Abständen mit Hilfe von Zugentlastungen an das Schleppglied bzw. die Schleppkette 14 angeschlossen, um etwaige Reibungen oder mechanische Belastungen der Leitungen 13, 15 zu vermeiden.

Die Auslegung ist darüber hinaus so getroffen, dass zu jeder elektrischen Versorgungseinheit bzw. elektrischen Anschlusseinheit 12 eine elektrische Anschlussleitung 13 führt. Außerdem ist die elektrische Versorgungseinheit 12 an die zumindest eine Datenleitung 15 angeschlossen. Das kann man am besten anhand der Darstellung in den Figuren 2A bis 2C nachvollziehen. Danach wird die betreffende elektrische Anschlussleitung 13 ausgehend von beispielsweise dem linken Festpunkt 18 in einer Schlinge über das kopfseitige Umlenkelement 18 bis hin zum anderen Festpunkt 18 geführt. Im Bereich der mit der betreffenden elektrischen Anschlussleitung 13 verbundenen elektrischen Versorgungseinheit 12 ist die elektrische Anschlussleitung 13 in einer senkrecht zur Zeichenebene und daher nicht sichtbaren Schleife beispielsweise entlang der Grundfläche 5a der Parkgondel 5 zur elektrischen Anschlusseinheit 12 und wieder zurück geführt.

Anhand der Fig. 3 erkennt man schließlich noch, dass die einzelnen Kettenglieder 19a, 19b mit seitlichen Führungszapfen 21 ausgerüstet sind. Die Führungszapfen 21 sorgen für den Eingriff mit dem als Doppelritzel ausgebildeten und kopfseitig drehbar des Grundgerüstes 3 gelagerten Umlenkelement 8. Die Datenleitung 15 ist schließlich noch an eine in der Fig. 1 lediglich angedeutete Steuereinheit 22 angeschlossen, die fußseitig des Grundgerüstes 3 vorgesehen sein mag. Mithilfe der Steuereinheit 22 wird nicht nur die beschriebene Zutrittskontrolle durchgeführt, sondern erfolgt auch eine Abrechnung der jeweils entnommenen elektrischen Energiemenge an der zugehörigen elektrischen Versorgungseinheit 12. Außerdem ist mithilfe der Steuereinheit 22 gegebenenfalls in Verbindung mit einem Versorgungsunternehmen für die elektrische Energieversorgung der einzelnen elektrischen Versorgungseinheiten 12 das einleitend bereits beschriebene Lastmanagement möglich und kann umgesetzt werden.

Insgesamt gewährleistet die Erfindung, dass zwischen den einzelnen Festpunkten 18 bzw. einem nicht ausdrücklich dargestellten elektrischen Schaltschrank zur Verbindung mit einer elektrischen Infrastruktur und den einzelnen elektrischen Versorgungseinheiten 12 eine direkte und bewegliche Kabelverbindung in Gestalt der Anschlussleitungen 13 ohne Schleifringe oder sonstige anfällige Kontakte realisiert ist, die dauerhaft und funktionssicher die jeweils erforderliche elektrische Leistung zur Verfügung stellt. Das gilt auch und insbesondere dann, wenn mithilfe der elektrischen Versorgungseinheit 12 beispielsweise Hochspannung zur Verfügung gestellt werden soll. Es versteht sich, dass die elektrische Versorgungseinheit 12 sowohl zur Abgabe von Gleichspannung als auch Wechselspannung je nach Bedarf oder auch von beidem in der Lage ist. Darüber hinaus lässt sich mithilfe der elektrischen Versorgungseinheit 12 bedarfsweise auch eine Beleuchtung der betreffenden Parkgondel 5 umsetzen. Außerdem können bei Bedarf und im Störungsfall zielgenau mithilfe der Steuereinheit 22 einzelne elektrische Versorgungseinheiten 12 abgeschaltet werden, ohne dass die übrigen elektrischen Versorgungseinheiten 12 und generell die Funktion der erfindungsgemäßen Lager-/Parkvorrichtung beeinträchtigt wird.

Die einzelnen U-förmigen Kettenglieder 19a, 19b des Schleppgliedes bzw. der Schleppkette 14 sind nach dem Ausführungsbeispiel aus Kunststoff hergestellt. Hier hat es sich als besonders günstig erwiesen, wenn die einzelnen Kettenglieder 19a, 19b als jeweils Kunststoffspritzgussteile ausgeführt sind. Dadurch wird zugleich eine wirksame elektrische Isolierung der zwischen den beiden U-Schenkeln 19a geführten Leitungen 13, 15 realisiert und umgesetzt. Außerdem ist hierdurch ein besonders reibungsarmer und dauerhafter Betrieb des Schleppgliedes bzw. der Schleppkette 14 gewährleistet. Demgegenüber ist die Antriebskette bzw. das Antriebsglied 7 in der Regel aus Stahl gefertigt. Das gilt auch für das Grundgerüst 3 und in der Regel auch für die Führungen bzw. Führungsvorrichtungen 16, 17 ebenso wie für die Parkgondeln 5.

## Patentansprüche

1. Lager-/Parkvorrichtung für vorzugsweise Fahrzeuge (1) wie beispielsweise Kraftfahrzeuge, Fahrräder etc., insbesondere vertikaler Parktower, mit mehreren gegenüber einem Grundgerüst (3) verfahrbaren Parkgondeln (5), ferner mit einem Antrieb (9, 10) für die miteinander gekoppelten Parkgondeln (5), und mit zumindest einer elektrischen Versorgungseinheit (12) sowie einer zugehörigen elektrischen Anschlussleitung (13) an wenigstens einer Parkgondel (5), wobei die jeweilige Parkgondel (5) zwischen einer Ladeposition und einer demgegenüber vertikal und/oder horizontal versetzten Lagerposition bzw. Parkposition verfahrbar ist,
**dadurch gekennzeichnet, dass**
wenigstens ein zusammen mit den Parkgondeln (5) verfahrbares flexibles Schleppglied (14) zur Führung der elektrischen Anschlussleitung (13) vorgesehen ist.

2. Vorrichtung nach Anspruch 1, **dadurch gekennzeichnet, dass** die Parkgondeln (5) mittels eines um wenigstens zwei Umlenkelemente (8) umlaufenden sowie von dem Antrieb (9, 10) angetriebenen flexiblen Antriebsgliedes (7) miteinander verbunden sind, welches das Schleppglied (14) mitnimmt.

3. Vorrichtung nach Anspruch 1 oder 2, **dadurch gekennzeichnet, dass** zwischen dem Antriebsglied (7) und dem Schleppglied (14) zumindest ein schwimmend gelagerter Mitnehmer vorgesehen ist.

4. Vorrichtung nach Anspruch 2 oder 3, **dadurch gekennzeichnet, dass** die Umlenkelemente (8) jeweils als Doppelräder zur Führung einerseits des Antriebsgliedes (7) und andererseits der Schleppgliedes (14) ausgebildet sind.

5. Vorrichtung nach einem der Ansprüche 1 bis 4, **dadurch gekennzeichnet, dass** das Schleppglied (14) an zwei Festpunkte (18) des Grundgerüstes (3) angeschlossen ist, welche vorzugsweise kopfseitig des Grundgerüstes (3) vorgesehen sind.

6. Vorrichtung nach einem der Ansprüche 1 bis 5, **dadurch gekennzeichnet, dass** das Schleppglied (14) lediglich über ein kopfseitig des Grundgerüstes (3) drehbar gelagertes Umlenkelement (8) geführt wird, während das Antriebsglied (7) über das kopf- und fußseitig drehbar am Grundgerüst (3) gelagerte Umlenkelement (8) geführt wird.

7. Vorrichtung nach einem der Ansprüche 1 bis 6, **dadurch gekennzeichnet, dass** das Schleppglied (14) in Frontansicht auf die Umlenkelemente (8) zwischen einer rechten vollständigen Schlingenposition, einer linken vollständigen Schlingenposition und einer mittigen jeweils Halbschlingenposition verfahrbar ist.

8. Vorrichtung nach einem der Ansprüche 1 bis 7, **dadurch gekennzeichnet, dass** das jeweilige Umlenkelement (8) als Doppelritzel für einerseits eine Antriebskette (7) als Antriebsglied (7) und andererseits eine Schleppkette (14) als Schleppglied (14) ausgebildet ist.

9. Vorrichtung nach Anspruch 8, **dadurch gekennzeichnet, dass** die Schleppkette (14) mit U-förmigen Kettengliedern (19a, 19b) zur Aufnahme der elektrischen Anschlussleitung (13) ausgebildet ist.

10. Vorrichtung nach Anspruch 9, **dadurch gekennzeichnet, dass** die U-förmigen Kettenglieder (19a, 19b) neben der wenigstens einen elektrischen Anschlussleitung (13) zusätzlich zumindest eine Datenleitung (15) aufnehmen.

11. Vorrichtung nach Anspruch 9 oder 10, **dadurch gekennzeichnet, dass** die U-förmigen Kettenglieder (19a, 19b) jeweils Trennstege (20) zur Trennung der einzelnen Leitungen (13, 15) voneinander aufweisen.

12. Vorrichtung nach einem der Ansprüche 9 bis 11, **dadurch gekennzeichnet, dass** die Leitungen (13, 15) mittels jeweiliger Zugentlastungen an die U-förmigen Kettenglieder (19a, 19b) angeschlossen sind.

13. Vorrichtung nach einem der Ansprüche 9 bis 12, **dadurch gekennzeichnet, dass** die U-förmigen Kettenglieder (19a, 19b) seitliche Führungszapfen (21) zum Eingriff in das jeweilige Umlenkelement (8) aufweisen.

14. Vorrichtung nach einem der Ansprüche 10 bis 13, **dadurch gekennzeichnet, dass** die Datenleitung (15) an eine Steuereinheit (22) zur Realisierung eines Lastmanagements angeschlossen ist.

15. Vorrichtung nach Anspruch 14, **dadurch gekennzeichnet, dass** die Steuereinheit (22) zur Steuerung jeder einzelnen Versorgungseinheit (12) in der Lage ist.

## Claims

1. A storage/parking device for, preferably, vehicles (1) such as for example motor vehicles, bicycles etc., in particular a vertical parking tower, with a plurality of parking gondolas (5), able to be moved with respect to a basic structure (3), furthermore with a drive (9, 10) for the parking gondolas (5) which are coupled to one another, and with at least one electrical supply unit (12) and with an associated electrical connecting line (13) on at least one parking gondola (5), wherein the respective parking gondola (5) is movable between a loading position and a storage position or respectively parking position offset vertically and/or horizontally with respect thereto,
**characterized in that**
at least one flexible drag link (14), movable together with the parking gondolas (5), is provided for guiding the electrical connecting line (13).

2. The device according to Claim 1, **characterized in that** the parking gondolas (5) are connected to one another by means of a flexible drive member (7) running around at least two deflection elements (8) and driven by the drive (9, 10), which drive member entrains the drag link (14).

3. The device according to Claim 1 or 2, **characterized in that** at least one floatingly mounted carrier is provided between the drive member (7) and the drag member (14).

4. The device according to Claim 2 or 3, **characterized in that** the deflection elements (8) are respectively configured as double wheels for guiding, on the one hand, the drive member (7) and, on the other hand, the drag member (14).

5. The device according to one of Claims 1 to 4, **characterized in that** the drag member (14) is connected at two fixed points (18) of the basic structure (3), which are preferably provided at the head side of the basic structure (3).

6. The device according to one of Claims 1 to 5, **characterized in that** the drag member (14) is guided only over a deflection element (8) mounted rotatably at the head side of the basic structure (3), whereas the drive member (7) is guided over the deflection element (8) mounted rotatably on the basic structure (3) at the head side and at the foot side.

7. The device according to one of Claims 1 to 6, **characterized in that** the drag member (14) in front view onto the deflection elements (8) is movable between a right-hand complete loop position, a lefthand complete loop position and a central respectively half loop position.

8. The device according to one of Claims 1 to 7, **characterized in that** the respective deflection element (8) is configured as a double pinion for, on the one hand, a drive chain (7) as drive member (7) and, on the other hand, a drag chain (14) as drag member (14).

9. The device according to Claim 8, **characterized in that** the drag chain (14) is configured with U-shaped chain links (19a, 19b) to receive the electrical connecting line (13).

10. The device according to Claim 9, **characterized in that** the U-shaped chain links (19a, 19b) receive, in addition to the at least one electrical connecting line (13), additionally at least one data line (15).

11. The device according to Claim 9 or 10, **characterized in that** the U-shaped chain links (19a, 19b) respectively have separating webs (20) for separating the individual lines (13, 15) from one another.

12. The device according to one of Claims 9 to 11, **characterized in that** the lines (13, 15) are connected by means of respective strain reliefs to the U-shaped chain links (19a, 19b).

13. The device according to one of Claims 9 to 12, **characterized in that** the U-shaped chain links (19a, 19b) have lateral guide pins (21) for engagement into the respective deflection element (8).

14. The device according to one of Claims 10 to 13, **characterized in that** the data line (15) is connected to a control unit (22) for realizing a load management.

15. The device according to Claim 14, **characterized in that** the control unit (22) is able to control each individual supply unit (12).

## Revendications

1. Dispositif de stockage/stationnement pour de préférence des véhicules (1) tels que des véhicules automobiles, des vélos, etc., notamment des tours de stationnement verticales, comportant plusieurs nacelles de stationnement (5) déplaçables par rapport à une structure de base (3), et comportant également un entraînement (9, 10) pour les nacelles de stationnement couplées les unes aux autres (5), et comportant au moins une unité d'alimentation électrique (12) et un câble de connexion électrique (13) associé à au moins une nacelle de stationnement (5), dans lequel la nacelle de stationnement (5) respective peut être déplacée entre une position de chargement et une position de stockage ou position de stationnement décalée verticalement et/ou horizontalement,
**caractérisé en ce que**
au moins un élément de remorquage flexible (14) qui peut être déplacé avec les nacelles de stationnement (5) est prévu pour guider le câble de connexion électrique (13).

2. Dispositif selon la revendication 1, **caractérisé en ce que** les nacelles de stationnement (5) sont reliées les unes aux autres au moyen d'un élément d'entraînement flexible (7) qui tourne autour d'au moins deux éléments de déviation (8) et est entraîné par l'entraînement (9, 10), qui entraîne l'élément de remorquage (14).

3. Dispositif selon la revendication 1 ou 2, **caractérisé en ce qu'**au moins un entraîneur flottant est prévu entre l'élément d'entraînement (7) et l'élément de remorquage (14).

4. Dispositif selon la revendication 2 ou 3, **caractérisé en ce que** les éléments de déviation (8) sont chacun conçus sous forme de roues doubles pour guider l'élément d'entraînement (7) d'une part et l'élément de remorquage (14) d'autre part.

5. Dispositif selon une des revendications 1 à 4, **caractérisé en ce que** l'élément de traction (14) est relié à deux points fixes (18) de la structure de base (3), qui sont prévus de préférence du côté de tête de la structure de base. (3).

6. Dispositif selon une des revendications 1 à 5, **caractérisé en ce que** l'élément de remorquage (14) est guidé uniquement sur un élément de déviation (8) qui est monté rotativement du côté de tête de la structure de base (3), tandis que l'élément d'entraînement (7) est guidé via l'élément de déviation (8) positionné rotativement sur la structure de base (3) du côté de la tête et du pied.

7. Dispositif selon une des revendications 1 à 6, **caractérisé en ce que** l'élément de remorquage (14) en vue de face peut être déplacé sur les éléments de déviation (8) entre une position de boucle complète droite, une position de boucle complète de gauche et une position centrale de demi-boucle.

8. Dispositif selon une des revendications 1 à 7, **caractérisé en ce que** l'élément de déviation respectif (8) est conçu comme un pignon double pour d'une part une chaîne de transmission (7) conçue comme un élément d'entraînement (7) et d'autre part une chaîne de remorquage (14) conçue comme un élément de remorquage (14) .

9. Dispositif selon la revendication 8, **caractérisé en ce que** la chaîne de remorquage (14) est conçue avec des maillons de chaîne en forme de U (19a, 19b) pour recevoir le câble de liaison électrique (13).

10. Dispositif selon la revendication 9, **caractérisé en ce que** les maillons de chaîne en forme de U (19a, 19b) reçoivent également au moins un câble de données (15) en plus du au moins un câble de connexion électrique (13) .

11. Dispositif selon la revendication 9 ou 10, **caractérisé en ce que** les maillons de chaîne en forme de U (19a, 19b) comportent chacun des âmes de séparation (20) pour séparer les lignes individuelles (13, 15) les unes des autres.

12. Dispositif selon une des revendications 9 à 11, **caractérisé en ce que** les lignes (13, 15) sont reliées aux maillons de chaîne en forme de U (19a, 19b) au moyen de dispositifs anti-traction respectifs.

13. Dispositif selon une des revendications 9 à 12, caractérisé en que les maillons de chaîne en forme de U (19a, 19b) comportent des broches de guidage latérales (21) pour venir en prise avec l'élément de déviation respectif (8).

14. Dispositif selon une des revendications 10 à 13, **caractérisé en ce que** le câble de données (15) est connecté à une unité de commande (22) pour mettre en œuvre une gestion de charge.

15. Dispositif selon la revendication 14, **caractérisé en ce que** l'unité de commande (22) est capable de commander chaque unité d'alimentation individuelle (12) .
